Europäisches Patentamt

European Patent Office

Office européen des brevets

(19)

(11) Veröffentlichungsnummer: **0 063 164**
**B1**

(12) **EUROPÄISCHE PATENTSCHRIFT**

(45) Veröffentlichungstag der Patentschrift: 07.08.85

(21) Anmeldenummer: 81102935.4

(22) Anmeldetag: 16.04.81

(51) Int. Cl.⁴: **F 16 D 59/02**, F 16 D 65/32, B 60 T 17/08

(54) Federspeicherbremszylinder.

(43) Veröffentlichungstag der Anmeldung:
27.10.82 Patentblatt 82/43

(45) Bekanntmachung des Hinweises auf die
Patenterteilung:
07.08.85 Patentblatt 85/32

(84) Benannte Vertragsstaaten:
AT CH DE FR GB IT LI

(56) Entgegenhaltungen:
DE-B-1 269 426
DE-B-1 680 823
DE-B-2 237 557

(73) Patentinhaber: FAG KUGELFISCHER GEORG
SCHÄFER Kommanditgesellschaft auf Aktien
Georg-Schäfer-Strasse 30
D-8720 Schweinfurt (DE)

(72) Erfinder: Scheuering, Hans
Adam-Riese-Strasse 51
D-8603 Ebern (DE)
Erfinder: Kus, Konrad
Siedlung Nord 111
D-8601 Rentweinsdorf (DE)

(74) Vertreter: Rehmann, Klaus H.
Postfach 1260 (FAG) Hauptbahnhofstrasse
D-8720 Schweinfurt (DE)

## Beschreibung

Die Erfindung betrifft einen Federspeicherbremszylinder nach dem Oberbegriff des Anspruchs 1. Derartige Federspeicherbremszylinder sind z. B. aus der DE—B—16 80 823 und der DE—B—22 37 557 bekannt. Dabei ist in einem Gehäuse ein von hydraulisch betätigten Kolben beaufschlagtes Druckstück angeordnet, das gegen die Kraft einer Feder axial verscheibbar ist und an dem der Kolben in einem Zylindereinsatz angeordnet ist, der in eine Bohrung des Druckstückes ragt, wobei das Druckstück gleitend auf dem Zylindereinsatz geführt ist. Sie dienen zum Erzeugen einer potentiellen Energie in Verbindung mit einer Bremsanlage von Kraftfahrzeugen aller Art, sowie Baumaschinen und Krananlagen. Bei stillgesetztem Fahrzeug befindet sich die Bremse in Eingriff. Zum Lösen der Bremse muß der Federspeicherbremszylinder mit hydraulischem Druckmittel beaufschlagt werden, wodurch sich ein Kolben oder ein Druckstück gegen die Kraft einer Feder verschiebt und die Bremse löst. Die bekannten Federspeicherbremszylinder gibt es in vielen Ausführungen, die speziell für den jeweiligen Anwendsungsfall ausgelegt sind. Sie unterscheiden sich dabei durch die Federkraft, den Hub und den Mindestlösedruck. Unter Mindestlösedruck wird der Druck im Hydrauliksystem verstanden, der erforderlich ist, um den Kolben oder das Druckstück des Federspeicherbremszylinders gegen die Kraft der Feder soweit zu verschieben, daß der maximal mögliche Verschiebeweg erreicht wird. Bisher wurden die Federspeicherbremszylinder für den jeweiligen Anwendungsfall speziell konstruiert, berechnet und hergestellt. Dadurch ergibt sich eine Vielzahl von Typen mit relativ geringer jeweiliger Stückzahl, die eine Massenproduktion nicht zuläßt und eine wirtschaftliche Lagerhaltung erschwert, da jede Type einen anderen Gehäuse- und Kolbendurchmesser aufweist, unterschiedliche Federn eingebaut sind und unterschiedliche Kolbenhübe vorgesehen sind.

Es ist deshalb Aufgabe der Erfindung, Federspeicherbremszylinder der eingangs genannten Art so weiterzuentwickeln, dab für die unterschiedlichen Anforderungen und Betriebsbedingungen möglichst viele gleiche Bauteile verwendet werden können, so daß eine wirtschaftliche Großserienfertigung und einfache Lagerhaltung trotz individueller Aufgabenstellung möglich ist.

Die Lösung der Aufgabe ist aus Anspruch 1 ersichtlich. Weitere vorteilhafte Ausgestaltungen sind in den Unteransprüchen enthalten. Der durch die Erfindung erreichte standardisierte Federspeicherbremszylinder kann in einfacher Weise an den jeweiligen Mindestlösedruck angepaßt werden, wozu lediglich der in der Bohrung des Druckstücks befindliche Zylindereinsatz mit dem Kolben ausgetauscht werden muß. Die Anpassung an unterschiedliche Kolbenhübe erfolgt durch Distanzringe, die in die Gehäusebohrung eingelegt sind und als Anschlag für das als Federteller ausgebildete Ende des Druckstücks dienen, Durch Verwendung von Federn gleichen Durchmessers aber unterschiedlicher Drahtstärke, Wicklung oder Werkstoffs läßt sich auch die Federkraft variieren.

Bei Federspeicherbremszylindern nach den Ansprüchen 3, 4 und 5 ist eine Notlösemöglichkeit eingebaut, die es gestattet, z. B. bei defekten Fahrzeugen, bei denen das hydraulische System ausgefallen ist, die Bremse zu lösen.

Die Erfindung soll an einigen Ausführungsbeispielen erläutert werden. Es zeigen:

Fig. 1 einen erfindungsgemäßen Federspeicherbremszylinder im Querschnitt.

Fig. 2 eine Seitenansicht eines Federspeicherbremszylinders nach Fig. 1.

Fig. 3 einen Federspeicherbremszylinder mit Notlöseeinrichtung im Querschnitt.

Fig. 4 eine Seitenansicht des Federspeicherbremszylinders nach Fig. 3.

Fig. 5 die Ausbildung des Druckstücks mit eintriegelbarem Druckbolzen in verriegeltem Zustand in der Vorderansicht geschnitten.

Fig. 6 die Ausbildung des Druckstücks mit verriegeltem Druckbolzen in der Seitenansicht.

Fig. 7 die Ausbildung des Druckstücks und des Druckbolzens in entriegeltem und gelöstem Zustand in der Vorderansicht.

Fig. 8 die Ausbildung des Druckstücks und des entriegelten Druckbolzens in der Seitenansicht.

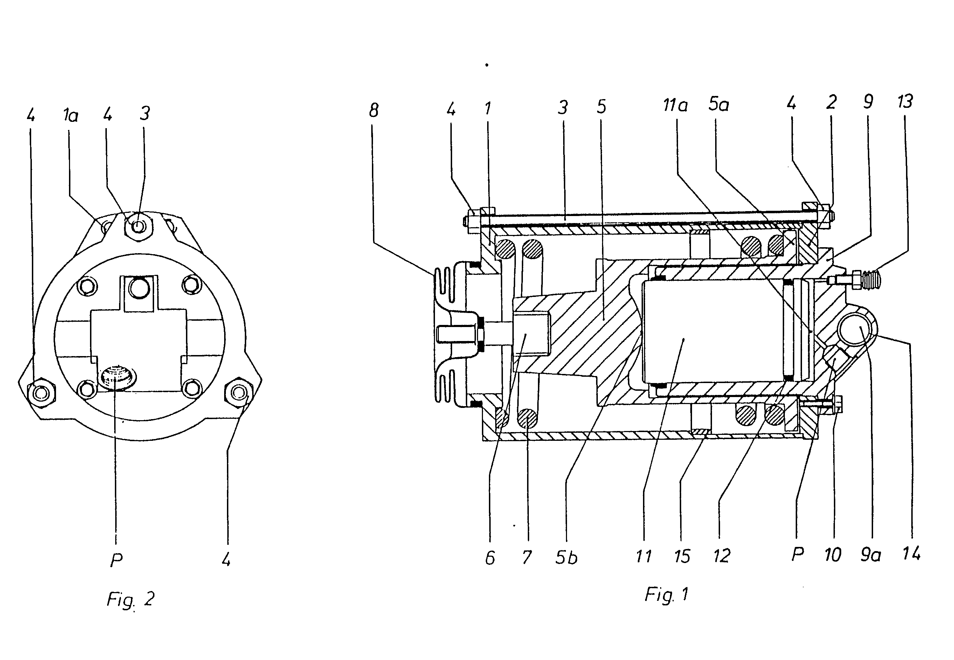

Der Federspeicherbremszylinder nach Fig. 1 besteht aus dem Gehäuse 1 und dem Gehäusedeckel 2, die von Ankerschrauben 3 und Muttern 4 zusammengehalten werden. Im Gehäuse 1 ist ein Druckstück 5 angeordnet, das an einem Ende als ein Federteller 5a ausgebildet ist, während am anderen Ende ein Druckbolzen 6 eingeschraubt ist. Eine Druckfeder 7 stützt sich am Gehäuse 1 und auf dem Federteller 5a ab und betätigt so die mit dem Druckbolzen 6 verbundene Bremse (nicht gezeigt). Eine auf dem Druckbolzen 6 und dem Gehäuse 1 befestigte Schutzkappe 8 dichtet den Federspeicherbremszylinder ab und schützt ihn vor dem Eindringen von Staub, Schmutz und Wasser. Am Gehäusedeckel 2 ist ein Zylindereinsatz 9 mittels Schrauben 10 befestigt, der in eine Bohrung des Druckstücks 5 ragt, so daß das Druckstück 5 auf dem Außendurchmesser des Zindereinsatzes 9 gleitend geführt ist und sich axial verschieben kann. In der Bohrung des Zylindereinsatzes 9 ist ein axial verschiebbarer Kolben 11 angeordnet, der zusammen mit dem Boden des Zylindereinsatzes 9 eine Druckkammer 11a bildet, in die über den Anschluß P Druckmittel eingepreßt wird, wenn die Bremse gelöst werden soll. Der Kolben 11 ist mit einer Dichtung 12 versehen. Am anderen Ende stützt sich der Kolben 11 auf dem Druckstück 5 ab, das an der Berührstelle eine kugelige Zone 5b aufweist um Querkräfte zu vermeiden. Im Boden des Zylindereinsatzes 9 ist eine Entlüfterventil 13 angebracht und ein Befestigungsauge 9a angeformt, in das eine Lagerbuchse 14 eingepreßn ist. In der Gehäusebohrung ist einn Distanzring 15 angeordnet, der als Anschlag für den Federteller 5a dient und somit den Kolbenhub begrenzt. Durch Einlegen unterschiedlich breiter Distanzringe läßt sich der Kolbenhub variieren.

Wie aus Fig. 2 ersichtlich, ist der Federspeicherbremszylinder mit rundem Querschnitt ausgeführt und weist lediglich am Gehäusedeckel und Gehäuseboden flanschartige Vorsprünge zur Befestigung auf. Zur sicheren Halterung bei waagerechtem Einbau sind am Gehäuseboden zwei Befestigungsbohrungen 1a vorgesehen. Das dargestellte Ausführungsbeispiel zeigt den Federspeicherbremszylinder in entspanntem Zustand, also bei angezogener Bremse. Die Funktionsweise ist dabei folgende: Wenn die Bremse gelöst werden soll bzw. wenn die Hydraulikpumpen des Kraftfahrzeugs eingeschaltet werden, setzt sich der aufgebaute Druck über Leitungen bis zum Anschluß P fort und baut in der Druckkammer 11a Druck auf. Dadurch wird der Kolben 11 im Zylindereinsatz 9 axial nach links verschoben und wirkt auf das Druckstück 5 ein, das sich gegen die Kraft der Druckfeder 7 ebenfalls nach links soweit verschiebt, bis der Federteller 5a am Distanzring 15 anschlägt bzw. bei herausgenommenen Distanzring 15 am Absatz der Gehäusebohrung anliegt. Solange der Mindestlösedruck andauert, bleibt der Druckbolzen 6 an dem die Verbindung zur Bremse befistigt ist, in dieser Lage und die Bremse befindet sich in gelöstem Zustand. Sobald der Mindestlösedruck jedoch unterschritten wird, etwa bei Abschalten des Motors oder bei defekter Druckölleitung, überwiegt die Federkraft und schiebt das Druckstück mit dem Druckbolzen und dem Kolben in die Ausgangslage zurück, wodurch die Bremse angezogen wird.

Soll nun der Federspeicherzylinder für einen anderen Mindestlösedruck und anderen Kolbenhub ausgelegt bzw. umgebaut werden, so ist es dazu nur erforderlich, den Zylindereinsatz 9 mit dem darin angeordneten Kolben 11 einzusetzen. Da der Bohrungsdurchmesser des Druckstücks und der Manteldurchmesser des Zylindereinsatzes unverändert bleibt und lediglich der Kolbendurchmesser und die Bohrung des Zylindereinsatzes 9 verändert werden, bleiben die anderen Teile des Federbremszylinders unverändert, obwohl nun der Federbremszylinder für einen anderen Mindestlösedruck und Kolbenhub ausgelegt ist. Dadurch enfällt eine aufwendige Lagerhaltung und die Typenvielzahl wird wesentlich vermindert. Außerdem wird so eine Großserienfertigung ermöglicht.

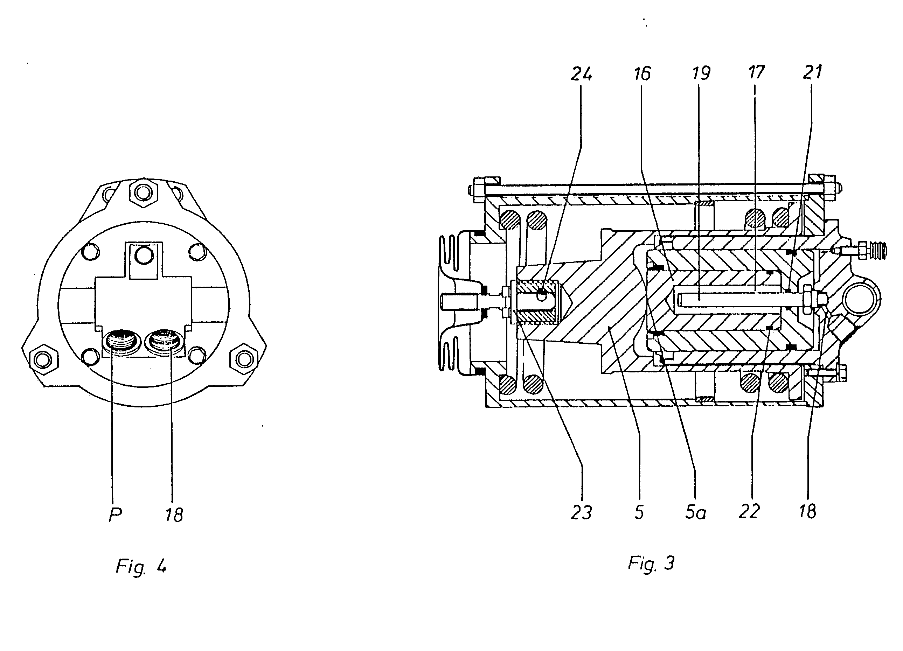

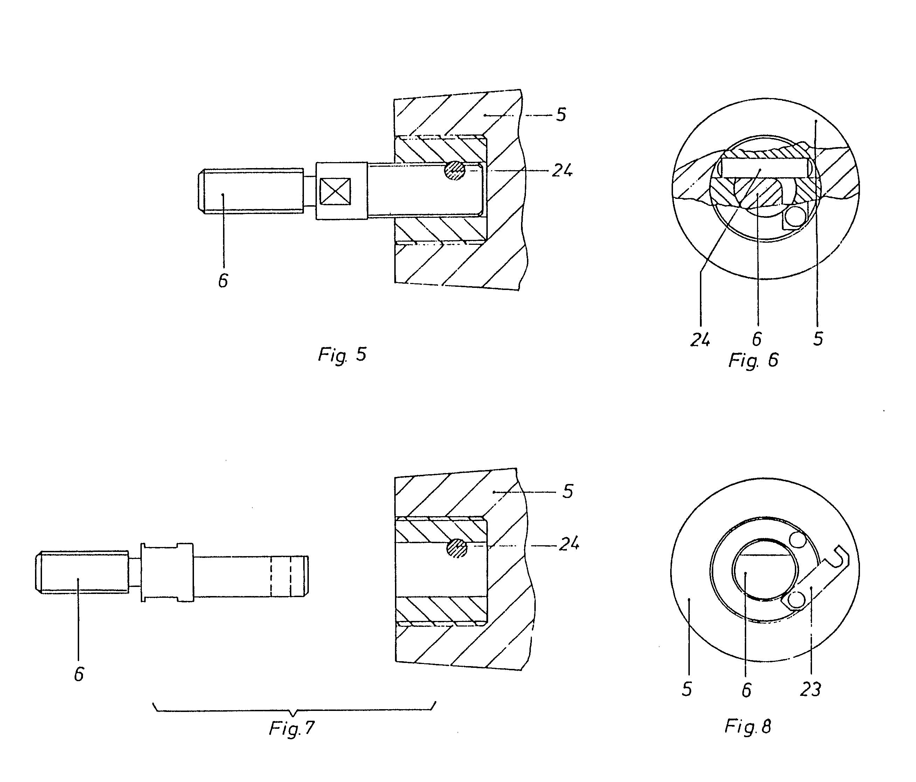

Bei dem in Fig. 3 und 4 gezeigten Federspeicherbremszylinder ist eine Notlöseeinrichtung vorgesehen, die es ermöglicht, z. B. bei einem Fahrzeug mit defektem Hydrauliksystem, bei dem also die Bremse angezogen ist, die Bremse zu lösen. Ein derartiger Federspeicherzylinder ist genau so aufgebaut wie der in Fig. 1 gezeigte, so daß auch hier ein Anspassen an unterschiedliche Mindestöldrücke und Kolbenhübe möglich ist. Jedoch ist zusätzlich im Kolben 11 ein weiterer Kolben 16 angeordnet, der eine weitere Zuführbohrung 18 und ein Verbindungsrohr 19 von einer systemunabhängigen Druckquelle, z. B. einer Handpumpe, mit Druckmittel beaufschlagbar ist. Falls also die Druckmittelversorgung über den Anschluß P unterbrochen wird, kann durch Einpumpen von Druckmittel in die Zuführbohrung 18 der Kolben 16 nach links verschoben werden, wobei Dichtungen 21 und 22 den Druckraum 17 dicht verschließen. Der Kolben 16 wirkt über die kugelige Zone 5a auf das Druckstück 5 ein und verschiebt dieses ebenfalls nach links, wodurch die Bremse gelöst wird.

Da auch Fälle denkbar sind, in denen es erforderlich sein kann, mit einer rein mechanischen Notlöseeinrichtung die Bremse von dem Federspeicherbremszylinder abzukoppeln, um z. B. ein defektes Fahrzeug abzuschleppen, ist der Federspeicherbremszylinder abtrennbar mit der Bremse verbunden. Dazu weist das der Bremse zugewandte Ende des Druckstücks 5 einen entriegelbaren Druckbolzen 6 auf. Der Druckbolzen 6 wird nach dem Wegschwenken des Riegels 23 um 90° gedreht, so daß der in einer Nut befindliche Sicherungsstift 24 außer Eingriff kommt. Die Verbindung is somit entriegelt und der Druckbolzen 6 kann herausgezogen werden. Dadurch wirkt auf die Bermse keine Federkraft mehr und sie ist gelöst.

In Fig. 5, 6, 7 und 8 ist der verriegelte und entriegelte Zustand der Verbindung zwischen Druckstück 5 und Druckbolzen 6 vergrößert dargestellt.

## Patentansprüche

1. Federspeicherbremszylinder, insbesondere für Kraftfahrzeuge, wobei in einem Gehäuse (1,2) ein von einem hydraulisch betätigten Kolben (11) beaufschlagtes Druckstück (5) angeordnet ist, das gegen die Kraft einer Feder (7) axial verschiebbar ist und an dem der Kolben (11) in einem Zylindereinsatz (9) angeordnet ist, der in eine Bohrung des Druckstücks ragt, wobei das Druckstück gleitend auf dem Zylindereinsatz geführt ist, dadurch gekennzeichnet, daß der Zylindereinsatz (9) am Gehäusedeckel (2) des Gehäuses (1) befestigt ist und der in die Bohrung des Druckstückes (5) eintauchende Kolben (11) und der Zylindereinsatz (9) austauschbar angeordnet sind.

2. Federspeicherbremszylinder nach Anspruch 1, dadurch gekennzeichnet, daß in der Bohrung des Gehäuses (1) ein austauschbarer Distanzring (15) angeordnet ist, der als Anschlag für das als Federteller (5a) ausgebildete Ende des Druckstückes (5) dient.

3. Federspeicherbremszylinder nach Anspruch 2, dadurch gekennzeichnet, daß im Kolben (11) ein weiterer Kolben (16) angeordnet ist, der eine weitere Druckkammer (17) bildet, die von einer systemunabhängigen Druckquelle mit Druckmittel beaufschlagbar ist.

4. Federspeicherbremszylinder nach Anspruch 3, dadurch gekennzeichnet, daß der Federspeicherbremszylinder abrennbar mit der Bremse verbunden ist.

5. Federspeicherbremszylinder nach Anspruch 4, dadurch gekennzeichnet, daß das der Bremse zugewandte Ende des Druckstückes (5) einen entriegelbaren Druckbolzen (6) aufweist.

**Revendications**

1. Cylindre de frein à ressort accumulateur pour véhicules automobiles où est disposé dans un logement (1,2), une pièce d'appui (5) chargée par un piston (11) de commande hydraulique, pouvant glisser en direction axiale contre la force de pression d'un ressort (7), et dont le piston (11) est disposé dans une cartouche de cylindre (3) pénétrant dans l'alésage de la pièce d'appui; la pièce d'appui coulisse à cet effet sur la cartouche de cylindre, caractérisé par le fait que la cartouche de cylindre (9) est fixée au couvercle (2) du logement (1) et que le piston (11) plongeant dans l'alésage de la pièce d'appui (5) et la cartouche de cylindre (9) soient tous deux remplaçables.

2. Cylindre de frein à ressort accumulateur suivant la revendication 1, caractérisé par le fait qu'une entretoise (15) remplaçable est disposée dans l'agésage du logement (1) et sert de butée à la coupelle de ressort (5a) par laquelle se termine la pièce d'appui (5).

3. Cylindre de frein à ressort accumulateur suivant la revendication 2, caractérisé par le fait qu'à l'intérieur du piston (11) est disposé un autre piston (16) formant une chambre de pression (17) qui peut être chargée au moyen d'un liquide hydraulique à partir d'une source de pression indépendante du système.

4. Cylindre de frein à ressort accumulateur suivant la revendication 3, caractérisé par le fait que le cylindre de frein à ressort accumulateur est relié au frein de façon séparable.

5. Cylindre de frein à ressort accumulateur suivant la revendication 4, caractérisé par le fait que l'extrémité de la pièce d'appui (5) dirigée vers le frein présente une tige de pression (6) déverrouillable.

**Claims**

1. Spring release accumulator, especially for motor vehicles, where, in a housing, a pressure unit (5) being applied by a hydraulically actuated piston (11), is arranged axially displaceable against the force of a spring (7) whereby a piston (11) is arranged in a cylindrical insert (9) which extends into a bore of the pressure unit, the pressure unit being guided sliding on the cylindrical insert, characterized in that the cylindrical insert (9) is fixed to the cover (2) of the housing (1), and in that the piston (11) plunging into the bore of the pressure unit (5) as well as the cylindrical insert (9) are arranged exchangeably.

2. Spring release accumulator according to claim 1, characterized in that in the bore of the housing (1) an exchangeable spacer ring (15) is arranged to serve as stop for the end of the pressure unit (5) designed as spring plate (5a).

3. Spring release accumulator according to claim 2, characterized in that a further piston (16) is arranged in piston 11, forming a further pressure chamber (17) which is supplied with pressure medium by a pressure source which is independent of the system.

4. Spring release accumulator according to claim 3, characterized in that the spring release accumulator is seperably connected to the brake.

5. Spring release accumulator according to claim 4, characterized in that the end of the pressure unit (5) pointing to the brake, features a delocking pressure pin (6).

Fig. 2

Fig. 1

0 063 164

Fig. 3

Fig. 4

Fig. 5

Fig. 6

Fig. 7

Fig. 8

0 063 164